# DEMANDE DE BREVET EUROPEEN

(11) **EP 4 790 513 A1**
(43) Date de publication de la demande: **12.08.2026**
(21) Numéro de dépôt: 25157059.4
(22) Date de dépôt: 11.02.2025
(51) Int. Cl.: G05G 1/44, G05G 5/04, G05G 5/05, G05G 1/38

(54) **PEDALE D'ACCELERATEUR POUR VÉHICULE SANS PERMIS OU INDUSTRIELS**

(71) Demandeur: Dura Automotive Systems, 42350 La Talaudiere (FR)
(72) Inventeur: PRADIER, Philippe, 42350 LA TALAUDIERE (FR)
(74) Mandataire: Ipsilon

(57) **Abrégé**

L'invention concerne une pédale (1) d'accélérateur pour véhicule sans permis ou industriel comprenant :
- un boîtier (2) avec deux joues (2a) parallèles ;
- un levier (3) monté pivotant dans le boîtier (2) entre les deux joues (2a) ; le levier (3) comprend deux doigts (3a) coaxiaux à section oblongue en saillie de part de la pédale (1) pour former un axe de pivotement du levier (3) ;
- deux ressorts de torsion (4), chacun positionné autour d'un doigt en saillie ;
- des moyens de butée (5) de la rotation du levier (3) en position de repos ;
- des moyens de butée (2e) de la rotation du levier (3) en position pivotée maximale ;
- un capteur (6) de position angulaire du levier (3) par rapport au boîtier (2) ;

les joues (2a) du boîtier (2) comprennent des orifices (2b) coaxiaux pour la réception des doigts (3a) du levier (3) avec capacité de pivotement, et des encoches (2c) d'insertion radiales débouchant dans les orifices (2b) pour l'insertion des doigts (3a) radialement dans les orifices (2b) selon la plus petite dimension de la forme oblongue desdits doigts (3a) ;
le boîtier (2) comprend des épaulements (2d) ménagés autour des orifices (2b) et formant une butée à une première extrémité du ressort de torsion (4), une deuxième extrémité du ressort de torsion étant en butée contre des épaulements (3b) ménagés autour des doigts (3a) de la pédale (1) de sorte que le ressort de torsion (4) tende à ramener la pédale (1) en position de repos.

## Description

### Domaine technique

La présente invention concerne le domaine des pédales d'accélérateur assujetties à un capteur de position angulaire, notamment celles destinées aux véhicules sans permis ou industriels et engins motorisés. Plus particulièrement, l'invention porte sur une conception simplifiée de ces pédales, visant à réduire le nombre de composants, à diminuer les coûts de fabrication et à limiter l'impact environnemental, tout en assurant un fonctionnement fiable et durable.

L'invention trouve une application avantageuse pour équiper les voitures sans permis d'une pédale d'accélérateur économique et de faible poids.

### Art antérieur

Dans l'état de la technique, les pédales d'accélérateur sont généralement constituées d'un ensemble mécano-soudé ou assemblées par divers éléments tels que des axes métalliques, des supports rigides, des ressorts de rappel et des rondelles de frottement. Ces systèmes, bien que fonctionnels, présentent plusieurs inconvénients.

L'assemblage de multiples pièces requiert des opérations de soudage, d'usinage ou de moulage, entraînant des coûts élevés en termes de main-d'œuvre et de matériaux.

La présence d'axes en métal et d'éléments additionnels contribue à alourdir la pédale, ce qui peut affecter l'efficacité énergétique globale du véhicule.

Les composants mécaniques tels que les axes et rondelles de frottement subissent des forces de frottement et d'usure au fil du temps, pouvant engendrer des défaillances prématurées.

La diversité des matériaux employés, notamment les alliages métalliques et les polymères, ainsi que les procédés de fabrication énergivores, augmentent l'empreinte écologique de ces systèmes.

Des solutions visant à réduire ces inconvénients ont été proposées, notamment l'intégration de matériaux composites ou l'optimisation des formes des composants. Cependant, ces approches restent limitées dans leur capacité à simplifier de manière significative la conception et à réduire le nombre total de pièces.

Il existe donc un besoin pour une pédale d'accélérateur simplifiée, intégrant un nombre réduit de composants, favorisant une fabrication économique et écologique, tout en garantissant des performances optimales en termes de robustesse et de confort d'utilisation

### Exposé de l'invention

L'un des buts de l'invention est donc de remédier aux problèmes précités en visant à simplifier la structure de la pédale, à réduire le nombre de composants, à faciliter son assemblage et à améliorer sa robustesse et sa durabilité.

L'invention repose sur une conception intégrant un levier pivotant avec des axes coaxiaux intégrés, un boitier avec des orifices et encoches d'insertion, et un système de rappel par ressorts de torsion, le tout permettant un assemblage plus efficace et une réduction des coûts de fabrication.

En particulier, il a été mis au point une telle pédale qui comprend :
- un boitier avec deux joues parallèles ;
- un levier monté pivotant dans le boitier entre les deux joues ; le levier comprend deux doigts coaxiaux à section oblongue, c'est-à-dire par exemple avec deux méplats parallèles, en saillie de part de la pédale pour former un axe de pivotement du levier ;
- deux ressorts de torsion, chacun positionné autour d'un doigt en saillie ;
- des moyens de butée de la rotation du levier en position de repos ;
- des moyens de butée de la rotation du levier en position pivotée maximale ;
- un capteur de position angulaire du levier par rapport au boîtier.

Les joues du boitier comprennent des orifices coaxiaux pour la réception des doigts du levier avec capacité de pivotement, et des encoches d'insertion radiales débouchant dans les orifices pour l'insertion des doigts radialement dans les orifices selon la plus petite dimension de la forme oblongue desdits doigts.

Le boîtier comprend des épaulements ménagés autour des orifices et formant une butée à une première extrémité du ressort de torsion, une deuxième extrémité du ressort de torsion étant en butée contre des épaulements ménagés autour des doigts de la pédale de sorte que le ressort de torsion tende à ramener la pédale en position de repos.

Le levier comprend directement des doigts coaxiaux à section oblongue, éliminant ainsi la nécessité d'un axe métallique séparé et réduisant le nombre de pièces et d'assemblages.

Grâce aux encoches radiales débouchant dans les orifices des joues du boitier, l'insertion du levier se fait de manière radiale, simplifiant l'assemblage et évitant des opérations de vissage ou de rivetage complexes. Une fois le levier inséré et pivoté, il est verrouillé dans le boitier du fait de la forme oblongue des sections des doigts et de l'encoche radiales.

L'intégration des doigts de pivotement au levier garantit un positionnement précis, limitant les jeux mécaniques et assurant une meilleure longévité.

Les épaulements ménagés dans le boitier et autour des doigts permettent un positionnement précis et sécurisé du ressort, assurant un rappel efficace du levier en position de repos sans risque de désalignement ou de frottement excessif.

Le capteur de position angulaire, par exemple rotatif à effet hall, inductif ou capacitif, convertit la position mécanique du levier en un signal électrique, afin de permettre l'intégration de la pédale dans des véhicules à commande électronique.

Selon une forme de réalisation particulière, les moyens de butée en position de repos sont une goupille insérée entre les deux joues du boitier.

L'utilisation d'une goupille entre les joues du boitier permet d'assurer une butée fiable et résistante aux sollicitations répétées.

Contrairement à des butées intégrées directement dans les joues du boitier, qui peuvent s'user avec le temps, la goupille permet une meilleure répartition des efforts et une durabilité accrue.

En cas d'usure ou de besoin d'adaptation, la goupille peut être changée indépendamment des autres composants, évitant ainsi le remplacement complet du boitier ou du levier.

Selon une forme de réalisation particulière, les moyens de butée de la position pivotée maximale sont une partie du boitier.

Plutôt que d'ajouter une butée distincte, la conception utilise directement une partie du boitier, simplifiant l'assemblage et réduisant les coûts de fabrication.

L'intégration directe de la butée limite le risque de jeu mécanique entre les composants et assure une limitation précise de la course du levier.

De préférence, le capteur de position angulaire du levier par rapport au boitier est positionné sur l'axe de rotation du levier.

Selon une forme de réalisation particulière :
- les 40-60 premiers degrés de rotation du levier, de préférence les 50 premiers degrés de rotation après insertion des doigts dans les orifices sont libres,
- les 15-35 degrés suivants, de préférence les 25 degrés suivant, permettent de mettre en tension le ressort de torsion,
- les 10-30 degrés suivant, de préférence les 20 degrés suivant, sont la course angulaire de fonctionnement du levier, entre les deux moyens de butée.

La présence d'une phase initiale de rotation libre permet le montage et le verrouillage du levier à l'intérieur du boitier.

La phase intermédiaire, avant mise en place de la butée de position de repos garantit que le ressort soit suffisamment en tension pour pouvoir ramener le levier en position de repos.

La phase finale correspond à la course fonctionnelle du levier, limitée entre les butées.

### Brève description des dessins

La [Fig.1] est une vue en perspective éclatée de la pédale d'accélérateur selon l'invention.
La [Fig.2] est une vue en perspective de la pédale, en position de repos.
La [Fig.3] est une vue en coupe d'une partie du boitier illustrant l'insertion des doigts du levier dans les orifices des joues selon la plus petite dimension de la forme oblongue.
La [Fig.4] est une vue similaire à celle de la figure 3, le levier ayant été pivoté en position de verrouillage.
La [Fig.5] est une vue en coupe illustrant le pivotement du levier et la mise en tension du ressort.
La [Fig.6] est une vue en coupe illustrant le levier pivoté en position armé du ressort et en position de repos.
La [Fig.7] est une vue similaire à celle de la figure 6, illustrant le levier pivoté en position maximale.

### Description détaillée de l'invention

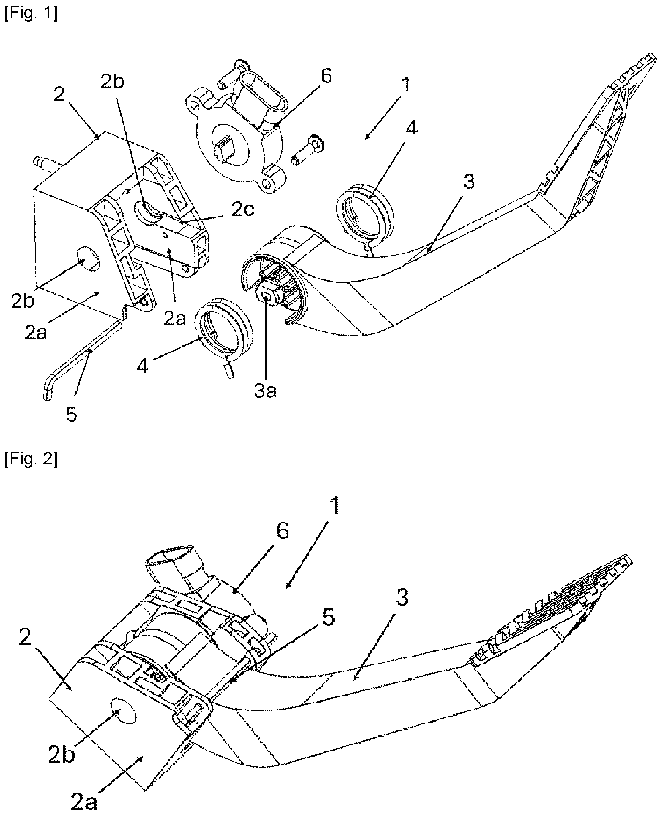

En référence aux figures 1 à 7, l'invention concerne une pédale (1) d'accélérateur destinée à être montée dans un véhicule sans permis ou industriel.

La pédale (1) comprend un boîtier (2), un levier (3) pivotant, et un système de rappel en position de repos par ressorts de torsion (4).

L'invention vise à simplifier la conception en réduisant le nombre de composants et en facilitant l'assemblage tout en assurant un fonctionnement robuste et fiable.

Dans un mode de réalisation, le boîtier (2) est de forme sensiblement parallélépipédique, réalisé en matériau plastique injecté ou en alliage métallique léger, et comprend deux joues (2a) parallèles s'étendant verticalement.

Ces joues (2a) sont pourvues d'orifices (2b) coaxiaux servant à recevoir le levier (3) pivotant sur lequel un utilisateur peut agir pour actionner l'accélérateur du véhicule.

Le levier (3), réalisé en matériau rigide tel qu'un polymère renforcé de fibres ou un alliage léger, est conçu pour s'articuler autour d'un axe formé directement par deux doigts (3a) coaxiaux en saillie, faisant partie intégrante du levier (3) lui-même. Ces doigts (3a) sont de section oblongue, par exemple avec deux méplats parallèles, permettant une orientation spécifique lors de leur insertion dans les orifices (2b) des joues (2a) du boîtier (2). Des nervures régulièrement réparties le long des doigts (3a) viennent rigidifier la conception.

En particulier, chaque orifice (2b) des joues (2a) du boîtier (2) est pourvu d'une encoche (2c) d'insertion radiale débouchant dans l'orifice, configurée pour permettre l'introduction radiale des doigts (3a) du levier (3). L'insertion se fait selon la plus petite dimension de la section oblongue des doigts (3a), après quoi une rotation du levier (3) dans sa position d'utilisation bloque son extraction, garantissant ainsi son maintien sans nécessiter d'éléments de fixation supplémentaires. Cette caractéristique réduit les coûts de production et limite le besoin d'ajout de pièces rapportées.

Le système de rappel du levier (3) en position de repos est assuré par deux ressorts de torsion (4), chacun positionné autour d'un des doigts (3a) du levier (3). Ces ressorts (4) sont maintenus en position par des épaulements (2d) prévus dans la structure du boîtier (2) autour des orifices (2b), formant une butée pour une première extrémité du ressort (4).

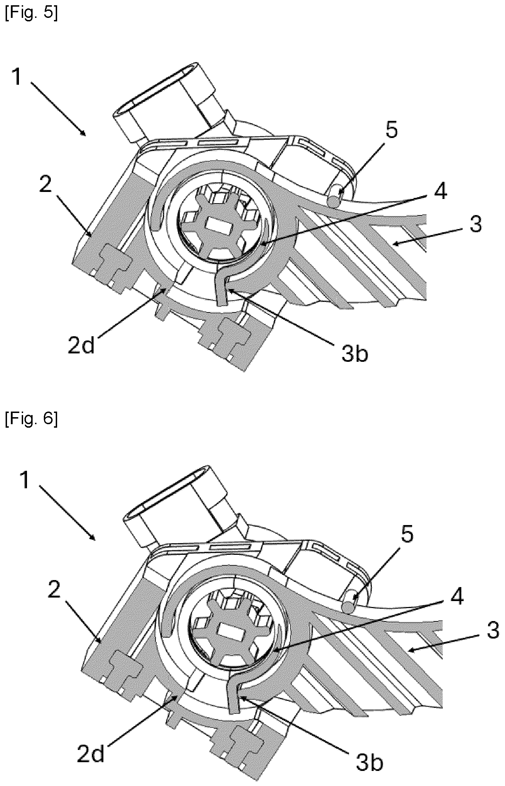

La seconde extrémité de chaque ressort (4) repose contre des épaulements (3b) formés autour des doigts (3a) du levier (3), de sorte que le ressort (4) exerce un couple tendant à ramener le levier (3) vers sa position de repos, voir figure 6. Cette disposition garantit un retour fiable de la pédale (1) après actionnement et évite les problèmes liés à des systèmes de rappel externes nécessitant un guidage supplémentaire.

Le mouvement du levier (3) est limité par des moyens de butée définissant deux positions extrêmes. En position de repos, le levier (3) vient en butée contre une goupille (5) insérée transversalement entre les joues (2a) du boîtier (2). Cette goupille (5), réalisée en acier ou en matériau composite haute résistance, présente une extrémité repliée destinée à venir dans un logement pour empêcher son retrait accidentel. En position pivotée maximale, la rotation du levier (3) est arrêtée par une partie (2e) intégrante du boîtier (2), agissant comme une butée fixe et évitant ainsi le recours à une pièce additionnelle. Cette configuration assure une limitation mécanique précise du débattement du levier (3) et améliore la fiabilité du dispositif.

Dans un mode de réalisation préféré, la pédale (1) est équipée d'un capteur (6) de position angulaire monté coaxialement avec l'axe de pivotement du levier (3). Ce capteur (6) peut être de tout type, par exemple rotatif, magnétorésistif ou à effet Hall, et est destiné à détecter ou à mesurer en temps réel, la position et/ou l'angle de rotation du levier (3) par rapport au boîtier (2).

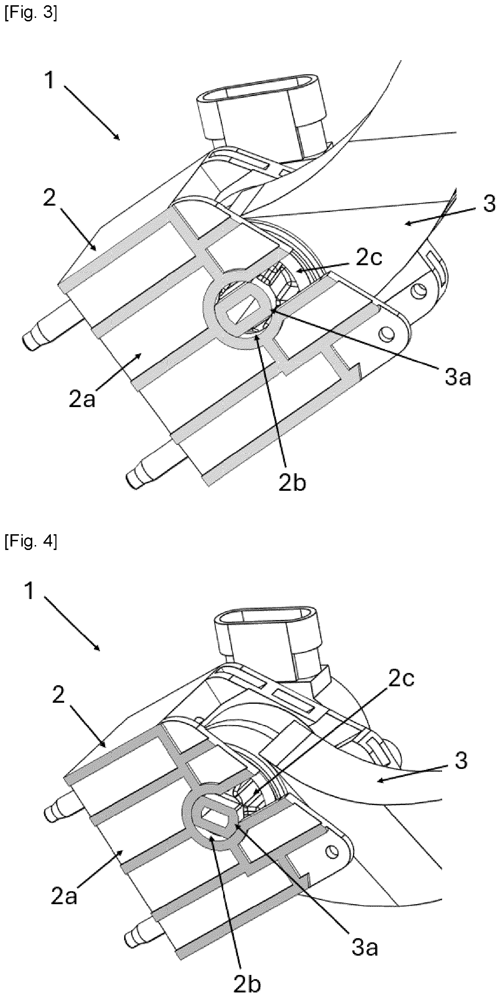

La cinématique de la pédale (1) est optimisée selon une répartition spécifique des angles de rotation. Immédiatement après l'insertion du levier (3) dans le boîtier (2), voir figures 3 et 4, les 40 à 60 premiers degrés de rotation du levier (3), de préférence 50 degrés, sont libres, permettant un mouvement initial sans mise en charge du ressort de torsion et correspondant à l'étape de verrouillage du levier (3) dans le boîtier (2).

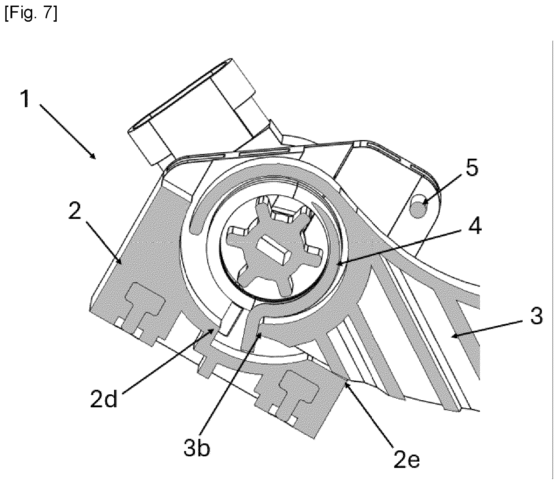

Les 15 à 35 degrés suivants, de préférence 25 degrés, correspondent à la mise en tension du ressort de torsion (4), voir figure 5, avant mise en place de la goupille (5), voir figure 6, générant un couple de rappel tendant à ramener le levier (3) en position de repos. Enfin, les 10 à 30 derniers degrés, de préférence 20 degrés, voir figure 7 constituent la course fonctionnelle du levier (3), c'est-à-dire la plage angulaire entre la position de repos et la position pivotée maximale.

L'ensemble des caractéristiques décrites confère à la pédale (1) d'accélérateur selon l'invention un certain nombre d'avantages techniques par rapport aux solutions existantes. L'intégration des axes de pivotement directement dans le levier (3) permet d'éliminer les axes métalliques rapportés, réduisant ainsi le poids et simplifiant l'assemblage. L'introduction radiale du levier (3) dans le boîtier (2) facilite le montage en et limite les opérations d'usinage complexes. L'optimisation du rappel par ressorts de torsion (4) intégrés garantit une fiabilité accrue sans nécessiter de guidage supplémentaire ou de réglage. La limitation du débattement par des butées intégrées assure un contrôle précis du mouvement et réduit les risques d'usure prématurée des composants.

L'invention permet ainsi d'obtenir une pédale (1) d'accélérateur à la fois plus économique à produire, plus légère et plus simple à assembler, tout en maintenant un haut niveau de fiabilité et de confort d'utilisation pour l'utilisateur.

## Revendications

1. Pédale (1) d'accélérateur pour véhicule sans permis ou industriel, ***caractérisée* en ce qu'**elle comprend :
- un boîtier (2) avec deux joues (2a) parallèles ;
- un levier (3) monté pivotant dans le boîtier (2) entre les deux joues (2a) ; le levier (3) comprend deux doigts (3a) coaxiaux à section oblongue en saillie de part de la pédale (1) pour former un axe de pivotement du levier (3) ;
- deux ressorts de torsion (4), chacun positionné autour d'un doigt en saillie ;
- des moyens de butée (5) de la rotation du levier (3) en position de repos ;
- des moyens de butée (2e) de la rotation du levier (3) en position pivotée maximale ;
- un capteur (6) de position angulaire du levier (3) par rapport au boîtier (2) ;
***et en ce que*** les joues (2a) du boîtier (2) comprennent des orifices (2b) coaxiaux pour la réception des doigts (3a) du levier (3) avec capacité de pivotement, et des encoches (2c) d'insertion radiales débouchant dans les orifices (2b) pour l'insertion des doigts (3a) radialement dans les orifices (2b) selon la plus petite dimension de la forme oblongue desdits doigts (3a) ;
***et en ce que*** le boîtier (2) comprend des épaulements (2d) ménagés autour des orifices (2b) et formant une butée à une première extrémité du ressort de torsion (4), une deuxième extrémité du ressort de torsion étant en butée contre des épaulements (3b) ménagés autour des doigts (3a) de la pédale (1) de sorte que le ressort de torsion (4) tende à ramener la pédale (1) en position de repos.

2. Pédale (1) d'accélérateur selon la revendication 1, ***caractérisée* en ce que** les moyens de butée en position de repos sont une goupille (5) insérée entre les deux joues (2a) du boîtier (2).

3. Pédale (1) d'accélérateur selon l'une des revendications précédentes, ***caractérisée* en ce que** les moyens de butée de la position pivotée maximale sont une partie (2e) du boîtier (2).

4. Pédale (1) d'accélérateur selon l'une des revendications précédentes, ***caractérisée* en ce que** le capteur (6) de position angulaire du levier (3) par rapport au boîtier (2) est positionné sur l'axe de rotation du levier (3).

5. Pédale (1) d'accélérateur selon l'une des revendications précédentes, ***caractérisée* en ce que** :
- les 40-60 premiers degrés de rotation du levier (3), de préférence les 50 premiers degrés de rotation après insertion des doigts (3a) dans les orifices (2b) sont libres,
- les 15-35 degrés suivants, de préférence les 25 degrés suivant, permettent de mettre en tension le ressort de torsion (4),
- les 10-30 degrés suivant, de préférence les 20 degrés suivant, sont la course angulaire de fonctionnement du levier (3), entre les deux moyens de butée (5, 3b).
